(19) Europäisches Patentamt
European Patent Office
Office européen des brevets

(11) **EP 3 171 508 A1**

(12) **EUROPEAN PATENT APPLICATION**

(43) Date of publication:
**24.05.2017  Bulletin 2017/21**

(21) Application number: **15460104.1**

(22) Date of filing: **19.11.2015**

(51) Int Cl.:
*H02P 21/04* (2006.01)    *H02P 21/22* (2016.01)
*H02P 21/14* (2016.01)

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**MA MD**

(71) Applicant: **ENEL-PC Spólka z orgraniczona odpowiedzialnoscia**
**44-101 Gliwice (PL)**

(72) Inventors:
• **Michalak, Jaroslaw**
**41-936 Bytom (PL)**

• **Zygmanowski, Marcin**
**44-121 Gliwice (PL)**
• **Biskup, Tomasz**
**41-908 Bytom (PL)**
• **Kolodziej, Henryk**
**44-240 ZORY (PL)**

(74) Representative: **Maslowski, Andrzej**
**Al. W. Korfantego 83**
**P.O. Box 1429**
**40-001 Katowice UP 1 (PL)**

Remarks:
Amended claims in accordance with Rule 137(2) EPC.

(54) **METHOD FOR THE SCALAR CONTROL OF AN INDUCTION MOTOR, PARTICULARLY AT LOW SPEED OPERATION, AND SCALAR CONTROL SYSTEM FOR AN INDUCTION MOTOR**

(57)    The invention relates to a method for the control of a squirrel-cage induction motor, particularly at low speed operation, and to a system for the scalar control of an induction motor powered by a frequency converter, which method improves the performance of the squirrel-cage motor, particularly at low speed operation.

The method according to the invention is characterized in that in order to determine motor voltage values a system related to the set stator flux position is used, and the said value is determined based on set flux amplitude, frequency of field rotation and feedback dependent on voltage drops across the stator resistance. In order to eliminate any operating instabilities of the drive caused by feedback dependent on voltage drops, a feedback dependent on ripple of current component parallel to the space vector of the set stator flux is used, and in order to compensate slip, the constant value of the current component perpendicular to the space vector of the set stator flux is used.

The system according to the invention has at its input a set frequency rate limiter **FRL**, which is connected via a flux forming module **FFS**, multiplier **x** and adder **W$_2$** to one of the inputs of transformation unit **T2** and is also connected via adder **W$_1$** to a second input of multiplier **x** and to an input of integrator **I**. The output of integrator **I** is connected to the inputs of transformation units **T1** and **T2**. The second input of adder **W$_1$** is connected via proportional term $k_M$ and low-pass filter **LPF$_1$** to the second output of transformation unit **T1**, the said output being also connected, via unit **R$_s$**, which represents resistance of the stator, to the second input of adder **W$_2$**. The first input of transformation unit **T2** is connected via unit **R$_s$** to the first output of transformation unit **T1**, the latter being also connected to low-pass filter **FDP$_2$** and adder **W$_3$**. Inputs of the coordinate transformation unit **T1** receive measured signals of motor currents, wherein one of the output circuits of transformation unit **T2** is directly connected to one of the inputs of modulator **MOD**.

EP 3 171 508 A1

**Description**

The invention relates to a method for the control of a squirrel-cage induction motor powered by a frequency converter, which method improves the performance of the squirrel-cage motor, particularly at low speed operation. The disclosed control method is designed for any converter-controlled squirrel-cage motor drive, particularly for high power drives, powered by multilevel converters because of voltage drops occurring therein and low transistor switching frequencies. Another object of the invention is to provide a system which utilizes the method for the scalar control of an induction motor disclosed herein.

In industrial applications of squirrel-cage induction motors, particularly where high power and lower dynamics are required, scalar control based on voltage-frequency characteristic is used. The main applications in such cases include pumps, fans, etc. Scalar control is also used in sensorless drives with field-oriented control, where a squirrel-cage drive runs with such control algorithm up to a certain, relatively low speed. Despite some advantages, such as simplicity or no need for detailed knowledge of motor specifications, scalar control has some drawbacks, especially when operating at high load at low speeds. In such cases, particularly when the starting torque has to be increased above the rated value, appropriate shaping of the voltage-frequency characteristic is applied. Appropriate shaping of stator voltages compensates the effects of voltage drops across converter valves and of motor stator resistance. Increasing voltage at low frequencies in a squirrel-cage motor provides sufficient flux, and thus a large starting torque, but under no-load conditions this often leads to an increase of the stator current above the rated value. An optimum solution, as is the case with higher speed operation, would be to maintain constant flux in the motor irrespective of the load with load-dependent compensation of speed variations.

The Polish patent application, number P.393380, describes a system that implements smooth shifting between vector and scalar control in asynchronous inverter-fed drives operating with low transistor switching frequency. The system disclosed therein has a motor torque and motor flux vector setting unit which is connected, via a stator current vector controller, the circuits of the latter including controllers of real and imaginary components of stator current vector and a module for smooth switching between vector and scalar control mode, with a vector modulator of voltage inverter output voltage. The voltage inverter feeds a squirrel-cage induction motor, and the power circuit includes a module for measuring three-phase motor stator currents, the said module being coupled with elements for switching controllers of real and imaginary components of stator current vector.

Another Polish patent application, number P.291695, describes an electric system for controlling an asynchronous squirrel-cage motor inverter, said system including a speed adjuster connected to control inputs of linearly increasing voltage modules and to an analog counting unit. The output of the counting unit is connected to non-inverting inputs of comparing and pulse forming units. Inverting inputs of these units are connected to outputs of linearly increasing voltage modules.

The Polish patent specification PL 163825 describes a control system for a voltage inverter with pulse width modulation, said inverter feeding a squirrel-cage motor. The system comprises a speed adjuster, absolute value unit, integrating units, linear rotational speed adjuster, current limiting module, dc-link circuit voltage limiting module, frequency and voltage correction unit, function generator, voltage-controlled generators and pulse width modulator, the outputs of which are connected to a system for controlling inverter transistor base currents. The disclosed system ensures smooth varying of the frequency and amplitude of the first harmonic of output voltage.

US patent US 3911340 teaches of a system for compensating voltage drops across stator resistances designed for an induction motor running at low speed. The system comprises means for setting current (proportional to torque), which current is compared with a signal corresponding to motor currents. This serves to derive a slip frequency, which is then added to the frequency of motor rotation. The summed frequency defines the frequency set for the converter. The voltage setting is derived in a unit which takes into account the set current, slip frequency and field rotation frequency in the motor.

Another US patent, US 6636011, discloses a system for controlling an induction motor operating under varying load conditions with no need to measure speed. The solution is based on the measurement of power factor and slip frequency. The control system is based on voltage/frequency characteristic and set value of the power factor. The set power factor value is compared with the actual value and, based on the calculated difference, a slip frequency signal is derived (in PID controller). Based on the slip, voltage correction and frequency correction is determined, which corrections are subtracted from the set values derived from voltage/frequency characteristic. The control allows improving energy efficiency of the drive.

The method for the scalar control of an induction motor according to the present invention consists in determining the value of motor supply voltage on the basis of the amplitude of stator flux $\psi_\mathbf{S}$, set frequency $f_\mathbf{Sset}$ and additional feedback from motor currents in the rotating coordinate system $i_\mathbf{Sx}$, $i_\mathbf{Sy}$ taking into account the stator resistance $R_\mathrm{S}$, and in introducing a correction signal $\Delta U_\mathbf{K}$ into the variable component of stator current % $i_\mathbf{Sx}$ parallel to the space vector of set stator flux in order to dampen the oscillations occurring in the amplitude of voltage vector $U_\mathbf{S}$, said oscillation resulting from positive feedback from stator current components $i_{Sx}$, $i_{Sy}$, and in introducing a correction from constant component of stator current $\bar{i}_{Sy}$, perpendicular to the space vector of set flux in order to compensate the slip occurring in the machine.

The control method also utilizes equations that describe components of motor supply voltage in steady state in the rotating coordinate system in accordance with current set position of stator flux vector (1).

$$u_{Sx} = R_S i_{Sx}$$
$$u_{Sy} = R_S i_{Sy} + \omega_S \Psi_S \qquad (1)$$

According to the invention, one voltage component in the motor control system is generated by multiplying the set value of the amplitude of flux $\psi_S$ (with account taken of the excitation process and of the changes in the value of flux dependent on frequency or load on the motor) by set current value of field angular frequency $\omega_S$, which value follows from the set frequency $f_{Sz}$. Additionally, in accordance with equation (1), voltage drops across stator resistance $R_S$ are determined, said drops being dependent on stator current components $i_{Sx}$, $i_{Sy}$, with possible effect of the converter taken into account. These quantities create the set signal for modulator **MOD** in the form of the amplitude of the voltage vector $U_S$ and its angle **y**. The value of the set amplitude of voltage $U_S$ also depends on the correction signal $\Delta U_K$ derived from variable component of current % $i_{Sx}$ parallel to the flux vector, enabling the dampening of oscillations that can be generated by feedback dependent on voltage drops across stator resistance. Due to the orientation in relation to the stator flux, the current component $i_{Sy}$ is in the steady state approximately proportional to the electromagnetic torque of the motor, which provides additional compensation of the slip in the asynchronous machine.

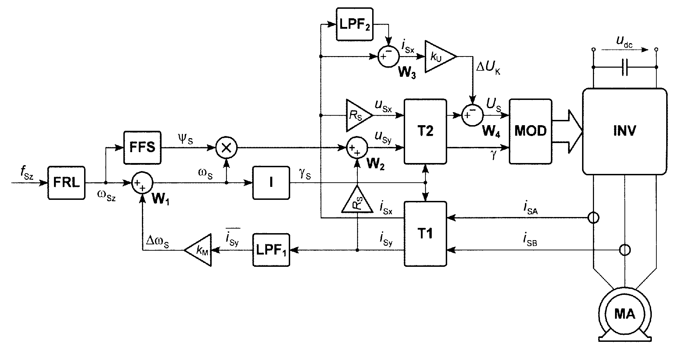

The method of scalar control of an induction motor is illustrated with an example of an induction motor control system presented diagrammatically in the drawing.

As shown in the drawing, the input of the induction motor scalar control system is a set frequency rate limiter **FRL,** which is connected to one of the inputs of transformation unit **T2** via a flux forming module **FFS,** multiplier **x** and adder **W₂**. The set frequency rate limiter **FRL** is also connected, via adder **W₁** with the second input of multiplier **x** and input of integrator **I**, the output of which is connected to inputs of transformation units **T1** and **T2**. The second input of adder **W₁** is connected via proportional term $k_M$ and low-pass filter **LPF₁** to the second output of transformation unit **T1**, the said output being also connected, via unit **R$_S$**, which represents resistance of the stator, to the second input of adder **W₂**. The first input of transformation unit **T2** is connected via unit **R$_S$**, which represents resistance of the stator, to the first output of transformation unit **T1**, the latter being also connected to low-pass filter **FDP₂** and adder **W₃**. The measured signals of motor currents are fed to the inputs of coordinate transformation unit **T2**. One of the output of transformation unit **T2** is directly connected to one of the inputs of modulator **MOD**, whereas the second input circuit of modulator **MOD** is connected to output of adder **W₄**, one of the inputs of which is connected to output of transformation unit **T2,** and the second input is connected to output of the proportional term, the input of which includes adder **W₃** and low-pass filter **LPF₂**. The output of modulator **MOD** is connected to the control circuit of voltage inverter **INV** which supplies the squirrel-cage induction motor **MA.**

The signal flow in the system and scalar control of an induction motor is effected as described below. Set signal of frequency $f_{Sz}$ is fed to the input of set frequency rate limiter **FRL.** The **FRL** unit limits the rate of frequency variation and forms a rippling output signal $\omega_{SZ}$. The output of unit **FRL** is connected to the flux forming unit **FFS** which is responsible for deriving the flux reference. Additionally, the output of unit **FRL** is connected to adder **W₁**, to the second input of which the output of proportional term **k$_M$** is connected, the latter representing slip correction signal $\Delta\omega_S$. The said correction is determined in the proportional term based on current component $i_{Sy}$ derived from coordinate transformation unit **T1** and filtered in low-pass filter **LPF₁**. Unit **T1** transforms signals of phase currents to the rotating coordinate system. Input signal from adder **W₁** is multiplied by the set value of flux and is fed to the first input of adder **W₂**. This signal is also fed to the input of integrator **I**, the output signal of which corresponds to the angular position of space vector of the set flux. The said angular position is utilized in transformation units **T1** and **T2**, which transform quantities between stationary and rotating coordinate systems. Input signal of the transformation unit **T2** in the form of voltage $u_{Sx}$, is derived from unit **R$_S$** which represents the resistance of the stator, to the input of which the signal of current component $i_{Sx}$ is fed from the coordinate transformation unit **T1**. The second input of transformation unit **T2** receives a signal from adder **W₂**, which adds the signal from the previously described multiplier to the output signal from another proportional unit **R$_S$**, the input of which receives second signal $i_{Sy}$ derived from coordinate transformation unit **T1**. The transformation unit **T2** processes the determined set values from the rotating coordinate system into a modulus-angle form, which constitute set values for the modulator **MOD**. The set voltage $U_s$ is previously modified in adder **W₄** using a correction signal derived from the proportional unit **k$_U$**. The input of unit **k$_U$** is fed with a signal from appropriately connected units of adder **W₃** and low-pass filter **LPF₂** which function as a highpass filter. The input signal for the high-pass filter is the current component $i_{Sx}$ derived from the coordinate transformation unit **T1**. Outputs from modulator **MOD** are connected to voltage inverter **INV** of any topology which supplies the squirrel-cage induction motor **MA.**

**Claims**

1.  A scalar control method of improved performance designed to control a squirrel-cage motor, the said method **characterized in that** in order to determine motor voltage values a system related to the set stator flux position is used, and the said value is determined based on set flux amplitude, frequency of field rotation and feedback dependent on voltage drops across the stator resistance, and in order to eliminate any operating instabilities of the drive caused by feedback dependent on voltage drops, a feedback dependent on ripple of current component parallel to the space vector of the set stator flux is used, and in order to compensate slip, the constant value of the current component perpendicular to the space vector of the set stator flux is used.

2.  A scalar control system for an induction motor, where coordinate transformation systems, an integrator and set frequency rate limiter are used to determine the motor supply voltage and frequency, and where motor currents are used to compensate for resistances and load torques, **characterized in that** the scalar control system has at its input a set frequency rate limiter (**FRL**), which is connected to one of the inputs of transformation unit (**T2**) via a flux forming module (**FFS**), multiplier (**x**) and adder (**W$_2$**), wherein the set frequency rate limiter (**FRL**) is also connected via adder (**W$_1$**) to a second input of the multiplier $\overline{(\mathbf{x})}$ and to an input of integrator (**I**), the output of which is connected to the inputs of transformation units (**T1**) and (**T2**), whereas the second input of adder (**W$_1$**) is connected via a proportional term (**k$_M$**) and low-pass filter (**LPF$_1$**) to a second output of transformation unit (**T1**), which output is also connected via unit (**R$_S$**), which represents resistance of the stator, to a second input of adder (**W$_2$**), whereas the first input of transformation unit (**T2**) is connected via unit (**R$_S$**), which represents resistance of the stator, to the first output of transformation unit (**T1**), which is additionally connected to a low-pass filter (**FDP$_2$**) and adder (**W$_3$**), whereas inputs of the coordinate transformation unit (**T1**) receive measured signals of motor currents, wherein one of the output circuits of transformation unit (**T2**) is directly connected to one of the inputs of modulator (**MOD**), and the second input circuit of modulator (**MOD**) is connected to output of adder (**W$_4$**), one of the inputs of which is connected to output of transformation unit (**T2**), and the second input of which is connected to an output of proportional unit, the input circuit of which includes adder (**W$_3$**) and low-pass filter (**LPF$_2$**), wherein output of modulator (**MOD**) is connected to the control circuit of voltage inverter (**INV**) which supplies the squirrel-cage induction motor (**MA**).

**Amended claims in accordance with Rule 137(2) EPC.**

1.  A control method for squirrel-cage induction motor, improvingits low speed operation, **characterized in that** in order to determinate supplying stator voltage values a system generating a command stator flux position is used, and the said position bases on the command rotor frequency and the slip signal, which is proportional to the dc part of the current component $i_{Sy}$ perpendicular to the command stator flux space vector, and said supplying voltage values are determined based on the command stator flux amplitude, the angular frequency of the stator field and voltage drops across the stator resistances that are products of stator resistances and the current components $i_{Sx}$, $i_{Sy}$, derived from transformation unit (**T1**), and in order to eliminate the drive operation instabilities which can occurs because of using positive feedback from voltage drops, an additional negative stabilizing feedback based on ac part of current component $i_{Sx}$, parallel to the space vector of the command stator flux, is used.

2.  A control system for an induction motor, where coordinate transformation systems, an integrator and set frequency rate limiter are used to determine the motor supply voltage and frequency, and where motor currents are used to compensate for resistances and load torques, **characterized in that** the control system has at its input a set frequency rate limiter (**FRL**), which is connected to one of the inputs of transformation unit (**T2**) via a flux forming module (**FFS**), multiplier (**x**) and adder (**W$_2$**), wherein the set frequency rate limiter (**FRL**) is also connected via adder (**W$_1$**) to a second input of the multiplier (**x**) and to an input of integrator (**I**), the output of which is connected to the inputs of transformation units (**T1**) and (**T2**), whereas the second input of adder (**W$_1$**) is connected via a proportional term (**k$_M$**) and low-pass filter (**LPF$_1$**) to a second output of transformation unit (**T1**), which output is also connected via unit (**R$_S$**),which represents resistance of the stator, to a second input of adder (**W$_2$**), whereas the first input of transformation unit (**T2**) is connected via unit (**R$_S$**),which represents resistance of the stator, to the first output of transformation unit (**T1**), which is additionally connected to a low-pass filter (**FDP$_2$**) and adder (**W$_3$**), whereas inputs of the coordinate transformation unit (**T1**) receive measured signals of motor currents, wherein one of the output circuits of transformation unit (**T2**) is directly connected to one of the inputs of modulator (**MOD**), and the second input circuit of modulator (**MOD**) is connected to output of adder (**W$_4$**), one of the inputs of which is connected to output of transformation unit (**T2**), and the second input of which is connected to an output of proportional unit, the input circuit of which includes adder **(W$_3$)** and low-pass filter (**LPF$_2$**), wherein output of modulator (**MOD**) is connected to the control circuit of voltage inverter (**INV**) which supplies the squirrel-cage induction motor (**MA**).

Europäisches
Patentamt

European
Patent Office

Office européen
des brevets

# EUROPEAN SEARCH REPORT

Application Number

EP 15 46 0104

## DOCUMENTS CONSIDERED TO BE RELEVANT

| Category | Citation of document with indication, where appropriate, of relevant passages | Relevant to claim | CLASSIFICATION OF THE APPLICATION  (IPC) |
|---|---|---|---|
| X | US 2012/091941 A1 (HONG CHAN OOK [KR]) 19 April 2012 (2012-04-19) | 1 | INV. H02P21/04 H02P21/22 H02P21/14 |
| A | * abstract * * paragraphs [0017], [0028] - [0043], [0063] - [0068] * * figure 1 * | 2 | |
| A | US 6 069 467 A (JANSEN PATRICK LEE [US]) 30 May 2000 (2000-05-30) * abstract * * figures 1-10 * * column 15 * * claim 21 * | 1,2 | |
| A | EP 2 034 604 A1 (MITSUBISHI ELECTRIC CORP [JP]) 11 March 2009 (2009-03-11) * abstract * * paragraphs [0008], [0028], [0060] * * claims 1,9 * * figure 3 * | 1,2 | |
| A | JP S61 147787 A (HITACHI LTD) 5 July 1986 (1986-07-05) * abstract * | 2 | TECHNICAL FIELDS SEARCHED      (IPC) H02P |

The present search report has been drawn up for all claims

| Place of search | Date of completion of the search | Examiner |
|---|---|---|
| Munich | 26 April 2016 | Vanata, Daniela |

CATEGORY OF CITED DOCUMENTS

X : particularly relevant if taken alone
Y : particularly relevant if combined with another
  document of the same category
A : technological background
O : non-written disclosure
P : intermediate document

T : theory or principle underlying the invention
E : earlier patent document, but published on, or
  after the filing date
D : document cited in the application
L : document cited for other reasons

 .............................................................................................................

& : member of the same patent family, corresponding
  document

EPO FORM 1503 03.82 (P04C01)

**EP 3 171 508 A1**

**ANNEX TO THE EUROPEAN SEARCH REPORT
ON EUROPEAN PATENT APPLICATION NO.**

EP 15 46 0104

This annex lists the patent family members relating to the patent documents cited in the above-mentioned European search report.
The members are as contained in the European Patent Office EDP file on
The European Patent Office is in no way liable for these particulars which are merely given for the purpose of information.

26-04-2016

| Patent document cited in search report | | | Publication date | Patent family member(s) | | | Publication date |
|---|---|---|---|---|---|---|---|
| US 2012091941 | A1 | | 19-04-2012 | NONE | | | |
| US 6069467 | A | | 30-05-2000 | NONE | | | |
| EP 2034604 | A1 | | 11-03-2009 | CA | 2654432 | A1 | 03-01-2008 |
| | | | | CN | 101443995 | A | 27-05-2009 |
| | | | | EP | 2034604 | A1 | 11-03-2009 |
| | | | | HK | 1129264 | A1 | 28-10-2011 |
| | | | | JP | 4757306 | B2 | 24-08-2011 |
| | | | | KR | 20090009967 | A | 23-01-2009 |
| | | | | TW | 200803147 | A | 01-01-2008 |
| | | | | US | 2009251083 | A1 | 08-10-2009 |
| | | | | WO | 2008001445 | A1 | 03-01-2008 |
| JP S61147787 | A | | 05-07-1986 | JP | H0344511 | B2 | 08-07-1991 |
| | | | | JP | S61147787 | A | 05-07-1986 |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- PL P393380
- PL P291695
- PL 163825
- US 3911340 A
- US 6636011 B